# EUROPÄISCHE PATENTANMELDUNG

(11) **EP 1 090 727 A1**
(43) Veröffentlichungstag der Anmeldung: **11.04.2001**
(21) Anmeldenummer: 99118305.4
(22) Anmeldetag: 15.09.1999
(51) Int. Cl.: B29B 17/02, B07B 13/00, B03B 9/06

(54) **Gewinnung und Verarbeitung von sortierten Kunststoffen aus sortenvermischten Altkunststoffen**

(71) Anmelder: SALYP ELV Center NV, 8900 Ieper (BE)
(72) Erfinder: Stricker, Urban, 57271 Hilchenbach (DE)
(74) Vertreter: Valentin, Ekkehard, Dipl.-Ing.

(57) **Zusammenfassung**

Die Erfindung betrifft ein Verfahren zur Gewinnung von sortierten Kunststoffen aus sortenvermischten Altkunststoffe (A). Das Verfahren beinhaltet Methoden der Reinigung von Altkunststoffen durch Wasser oder Lösungsmittel und Methoden der thermoplastischen Sortierung von Kunststoffen. Das Verfahren wird dadurch verbessert, daß nach der Reinigung der Altkunststoffe die Trocknung und die Temperierung für die thermo-plastische Sortierung (C) in einer Vorrichtung (8, 9) erfolgt, so daß der Wärmeeintrag sowohl zur Trocknung als auch zur Sortierung genutzt wird. Die Verarbeitung der Kunststoffe besteht darin, daß nachfolgend zur thermoplastischen Sortierung (C) die erwärmten und teilweise noch erweichten Kunststoffteile (E) in einer Bandpresse, einem Quetschwalzenpaar oder durch eine auf einem Band wirkende Quetschwalze (19) zu einem Fell ausgewalzt werden, welches im weiteren Verlauf einer Stanze (20) oder einer Schneidwalze zugeführt wird, so daß als Produkt (F) granulat-ähnliche Partikel resultieren, ohne daß zur Plastifizierung eine homogenisierende Schmelzephase durchlaufen wird.

## Beschreibung

Die Erfindung betrifft ein Verfahren zur Gewinnung von sortierten Kunststoffen aus sortenvermischten Altkunststoffen, welches Methoden der Reinigung von Altkunststoffen durch Wasser oder Lösungsmittel und Methoden der thermo-plastischen Sortierung von Kunststoffen beinhaltet.

Gebräuchliche Verfahren zur Gewinnung von sortierten Kunststoffen aus sortenvermischten Altkunststoffen beinhalten nach einer eingangsseitigen Zerkleinerung und Fremdstoffsichtung im allgemeinen als weitere Schritte eine wässerige Wäsche zur Reinigung und eine mit der Reinigung gekoppelte Sortierung aufgrund unterschiedlicher Dichten verschiedener Kunststoffsorten, beispielsweise mittels Schwimm/Sink-Trennung, Hydrozyklonierung (bspw. DE 41 06 812) oder Zentrifugierung. Die so behandelten Kunststoffpartikel werden anschließend getrocknet und als rieselfähiges Gut einer Plastifizierung in Extrudern oder einer andersgearteten Verwertung zugeführt.

Zur mechanischen Sortierung werden als neue Vorgehensweisen solche Methoden beschrieben, die eine trockene Sortierung auf Basis von Dichteunterschieden (bspw. DE 41 21 808) oder auf Basis von dielektrischen oder elastischen (bspw. DE 36 01 175) oder thermo-plastischen (bspw. DE 37 22 777; DE 40 04 300; WO 93/17852; WO 94/00241) Eigenschaften gestatten.

Alle zuvor im Stand der Technik angeführten Methoden zur Sortierung, die nicht auf einer Dichtesortierung beruhen, sind noch nicht oder lediglich sehr eingeschränkt technisch nutzbar. Die Einschränkungen gelten insbesondere für die in der jeweiligen Aufbereitung zulässig behandelbaren Altstoffe. Eine Sortierung aufgrund dielektrischer Eigenschaftsunterschiede eignet sich bislang lediglich zur Trennung binärer Gemenge. Solche Einschränkungen hinsichtlich der zur Aufbereitung gelangenden Altstoffe erfordern also immer eine weitestgehende Vorsortierung, die heute allenfalls manuell beziehungsweise manuell mit unterstützender apparativer Analytik durchgeführt werden kann (z.B. bei der Demontage von Altautos). Die Kosten für eine manuell vorklassierende Erfassung beziehungsweise für eine manuelle Vorsortierung sind höher als die Kosten für die nachfolgende Aufbereitung nach dem Stand der Technik.

Der Erfindung liegt die Aufgabe zugrunde, Verfahren zur Gewinnung von sortierten Kunststoffen aus sortenvermischten Altkunststoffen zu entwickeln, die im Vergleich zur allgemein gebräuchlichen Vorgehensweise ein qualitativ besseres Verfahrensergebnis ermöglichen und die gleichzeitig zu geringen Kosten durchführbar sind. Insbesondere sollen für viele Aufgabenstellungen im Recycling von Altkunststoffen vereinfachte Verfahren der Erfassung ermöglicht werden, so daß dieser wesentliche Kostenfaktor beim Recycling reduziert wird.

Die gestellte Aufgabe wird erfindungsgemäß durch die Merkmale der Patentansprüche 1, 2 oder 3 gelöst.

Die im Patentanspruch 1 beschriebene Koppelung der Trocknung nach dem Waschen mit der Temperierung vor der thermo-plastischen Sortierung hat eine kostensenkende Wirkung für die gesamte Aufbereitung, und zwar im vergleichbaren Maß wie dies aus der herkömmlichen Koppelung der Wäsche mit einer Dichtesortierung bekannt ist. Somit wird die thermo-plastische Sortierung wettbewerbsfähig. Da die thermo-plastische Sortierung auch für Kunststoffe mit überlappenden Dichten geeignet ist, können mit dem erfindungsgemäßen Verfahren nun solche Fraktionen kostengünstig erfaßt werden, die bisher nur als weitestgehend unzerstörte Produkte erfaßt werden können. Im Gegensatz zum Stand der Technik können die Altprodukte bereits dezentral zerkleinert werden, wodurch neben der Qualitätsverbesserung deren bisherig hohe Aufwand zur Erfassung deutlich gesenkt wird.

Eine geeignete Vorrichtung zur Durchführung des Verfahrens nach Anspruch 1 ist zum Beispiel das Infrarot-Drehrohr, wie es bspw. in der DE 195 02 352 C2 beschrieben ist.

Die im Patentanspruch 2 beschriebene Koppelung der thermo-plastischen Sortierung mit Methoden der plastifizierenden Verarbeitung führt zur Nutzung der in den Kunststoffteilen enthaltenen Restwärme als anteilige Plastifizierwärme. Daraus resultiert ein vorteilhaft geringerer Energieeintrag zur Plastifizierung. In der herkömmlichen Plastifizierung wird der Großteil der Plastifizierwärme über die Scherung der Kunststoffteile in der Plastifizierschnecke eingebracht. Die Wärme wird also im Materialinneren generiert (Scherwärme). Mit dem erfindungsgemäßen Eintrag von vorerwärmten und vorerweichten Kunststoffteilen in die Plastifizierschnecke wird im Gegensatz dazu ein Großteil der Plastifizierenergie durch äußere Wärmeeinwirkung eingebracht. Dadurch wird die hohe Scherbeanspruchung von Kunststoffen vermieden, was zu einer geringeren Materialschädigung führt. Im Einzelfall kann somit auf zusätzliche Polymer-stabilisierende Maßnahmen verzichtet werden und im allgemeinen Fall resultiert neben einer Kostensenkung eine verbesserte Produktqualität.

Die im Patentanspruch 3 beschriebene Koppelung der thermo-plastischen Sortierung mit einer vereinfachten Verarbeitung zu rieselfähigen Granulaten zeigt nochmals weitergehende Vorteile für den gesamten Recyclingprozeß. Neben der nach der Sortierung bereits enthaltenen Restwärme besteht nur noch ein sehr geringer weiterer Wärmebedarf, um die Kunststoffteile in ein Fell zu überführen. Dieses Fell muß keine vollständige Platte sein, vielmehr kann es netzartig auch größere Löcher aufweisen. Da der Kunststoff keine homogenisierende Schmelze durchläuft, wird er weder durch hohe Temperaturen noch durch Scherung beansprucht, wodurch sich die oben zum Anspruch 2 aufgezeigten Vorteile zur Polymerqualität des Sekundärproduktes nochmals verstärken. Der im Vergleich zum Verfahren nach Anspruch 2 nochmals reduzierte Energieaufwand führt zu einer entsprechenden weiteren Kostenersparnis.

Da anstelle der sonst üblichen Extrusion das Auswalzen des erweichten Kunststoffes und das anschließende Stanzen, bzw. Schneiden zum Granulieren genutzt wird, sind hinsichtlich der Kontinuität des Materialflusses in der gesamten Aufbereitung stark vereinfachte Bedingungen ermöglicht:
Schwankungen im Durchsatz der einzelnen sortierten Fraktionen können zwar öfter dazu führen, daß das Fell von Zeit zu Zeit abreißt und kein Granulat gefertigt wird, sie führen jedoch im Gegensatz zur Extrusion nicht zu einer Prozeßunterbrechung. Für den Fall, daß keine Altstoffe auf die Gesamtanlage aufgegeben werden, kann die Anlage einfach in einen "stand-by" Modus geschaltet oder auch bedarfsgerecht in einem "switch on, switch off" Modus gefahren werden. Dies erbringt im Vergleich zur kontinuierlich zu betreibenden Extrusion wichtige wirtschaftliche Vorteile für den Betrieb einer Recyclinganlage. Insbesondere ist mit der erfindungsgemäßen Lösung die gesamte Aufbereitung und Verarbeitung vollständig unabhängig von schwankenden Verhältnissen der verschiedenen aufgegebenen Kunststoffsorten.

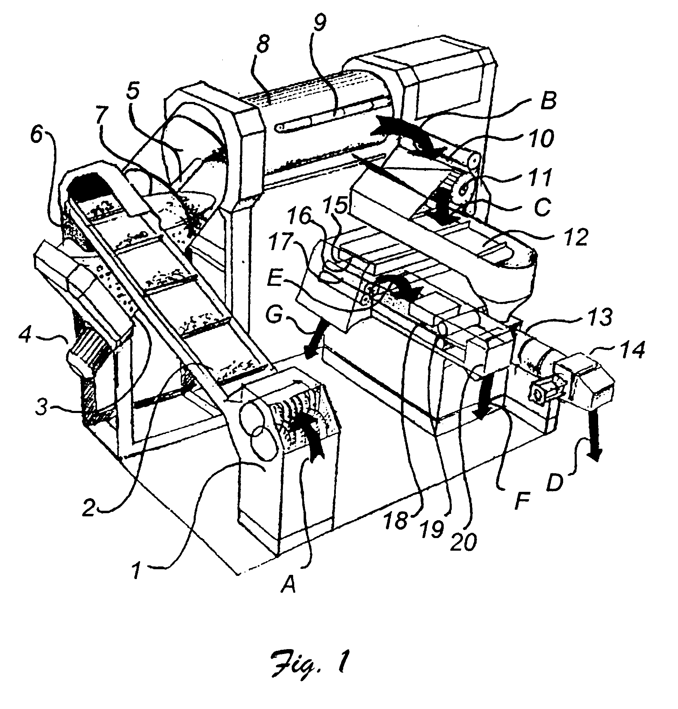

Die Erfindung wird anhand des nachfolgenden Beispiels einer Aufbereitungs- und Verarbeitungsanlage für Altkunststoffe gemäß Figur 1 näher beschrieben. Ergänzend zu den Bezugszeichen werden alphanumerisch gekennzeichnete Materialflußpfeile zur zweckmäßigen Erläuterung der Figur 1 herangezogen.

Im Zerkleinerer (1) werden eingehende Kunststoffteile (A) zu einer möglichst einheitlichen Größe zerkleinert und auf das Förderband (2) aufgegeben. Dieser Zufördereinheit zum Waschzylinder (3) können ergänzend hier nicht gezeigte, dem Stand der Technik gemäße Vorrichtungen, bspw. zur magnetischen oder mechanischen Sichtung zugeordnet sein.

Die Waschanlage ist hier beispielhaft in der Ausführung eines geneigt angeordneten Waschzylinders (3) mit einer durch den Motor (4) angetriebenen, rotierenden Schneckenwendel (5) gezeigt. Das durch die Schleuse (6) eingebrachte Gut wird mittels der Schneckenwendel (5) durch die bis zum Spiegel (7) anstehenden Waschlösung gefördert und zum Schneckenrohrförderer (8) ausgetragen.

Der Schneckenrohrförderer (8) verfügt bspw. gemäß DE 195 02 352 C2 über innenliegende Infrarot-Wärmestrahler (9). In diesem Infrarot-Drehrohr werden die freifließenden Kunststoffteile unter kontinuierlicher Zwangsförderung getrocknet und bis an die Temperatur erwärmt, bei welcher der erste "Zielthermoplast" erweicht.

Die erwärmten Kunststoffteile werden im Anschluß dem Einzugsbereich der thermo-plastischen Sortiervorrichtung (10) bspw. gemäß WO 93/17852 zugeführt (B). Der an der Separierwalze (11) fixierte Zielthermoplast wird nach dem Ablösen (C) von der Separierwalze (11) über das Förderband (12) dem Plastifizierextruder (13) zugeführt. Als Produkt resultiert ein mit dem Granulier-Werkzeug (14) erzeugtes Granulat(D).

Der nicht an die Separierwalze (11) fixierte Anteil des Materialstromes verläßt die Sortiervorrichtung in deren unteren Bereich, in Figur 1 perspektivisch bedingt, nicht zu ersehen. Diese Kunststoffteile werden auf dem Transportband (15) unter der zugeordneten Wärmequelle (16) weiter bis an die Temperatur erwärmt, bei welcher der zweite "Zielthermoplast" erweicht. Die erwärmten Kunststoffteile werden im Anschluß an das Transportband (15) einer zweiten Sortiervorrichtung (17) bspw. gemäß WO 93/17852 zugeführt.

Der fixierte zweite Zielthermoplast wird nach dem Ablösen von der Separierwalze dem Transportband mit zugeordneter Wärmequelle (18) zugeführt (E). Die weiter erwärmten Kunststoffteile werden in der Walzvorrichtung (19) zu einem Fell ausgebildet, welches durch die Stanzvorrichtung (20) in ein Stanz-Granulat (F) überführt wird.

Der in der zweiten Sortiervorrichtung (17) nicht fixierte, durchlaufende Materialstrom (G) ist ein unter den zuvor herrschenden Bedingungen nicht erweichendes Material. Dies kann je nach Art der eingehenden Kunststoffteile (A) bspw. ein höher erweichender Thermoplast, ein Duroplast oder ein Gemenge von Material sein. Auch kann die Anlage hier zur Gewinnung weiterer Teilkomponenten aus dem Materialfluß (G) durch nachfolgende Sortiervorrichtungen bspw. gemäß WO 93/17852 erweitert werden.

Der zuvor beispielhaft aufgezeigten Anlage können als Materialstrom also auch komplex aufgebaute Produkte oder Produktkomponenten aufgegeben werden. Diese können der Anlage in bereits zerkleinerter Form angeliefert werden.

Es wird deutlich, daß entsprechende Anlagen so ausgelegt werden können, daß bei einem kontinuierlichen Materialfluß der gesamte Prozeß der mechanischen Aufbereitung und der Verarbeitung in einer Wärme erfolgt.

Gleichwohl ist bereits die Durchführung eines einzelnen Verfahrensschrittes gemäß der Ansprüche 1 bis 3 geeignet, die gestellte Aufgabe erfindungsgemäß zu lösen. Beispielsweise kann in Abhängigkeit zur Logistik in der Erfassung der Altstoffe eine dezentrale Zerkleinerung, Reinigung und Sortierung zu Zwischenprodukten führen, die an unterschiedlich spezialisierte Verwertungsbetriebe veräußert werden. Ebenso kann es für einen spezialisierten Verwertungsbetrieb wirtschaftlich vorteilhaft sein, eine erfindungsgemäße Anlage für solche Eingangsstoffe zu betreiben, die keiner Reinigung oder Trocknung bedürfen.

### Liste der Bezugszeichen

- (A): eingehende Kunststoffteile
- (B): Zufuhr zur Sortiervorrichtung
- (C): von der Separierwalze abgelöster Zielthermoplast
- (D): Granulat
- (E): von der zweiten Separierwalze abgelöster Zielthermoplast
- (F): Stanz-Granulat
- (G): durchlaufender Materialstrom

- (1): Zerkleinerer
- (2): Förderband
- (3): Waschzylinder
- (4): Motor
- (5): Schneckenwendel
- (6): Schleuse
- (7): Spiegel der anstehenden Waschlösung
- (8): Schneckenrohrförderer
- (9): Infrarot-Wärmestrahler
- (10): Einzugsbereich der thermo-plastischen Sortiervorrichtung
- (11): Separierwalze
- (12): Förderband
- (13): Plastifizierextruder
- (14): Granulier-Werkzeug
- (15): Transportband
- (16): Wärmequelle
- (17): Sortiervorrichtung
- (18): Wärmequelle
- (19): Walzvorrichtung
- (20): Stanzvorrichtung

## Patentansprüche

1. Verfahren zur Gewinnung von sortierten Kunststoffen aus sortenvermischten Altkunststoffen, welches Methoden der Reinigung von Altkunststoffen durch Wasser oder Lösungsmittel und Methoden der thermoplastischen Sortierung von Kunststoffen beinhaltet
**dadurch gekennzeichnet,**
daß nach der Reinigung der Altkunststoffe die Trocknung und die Temperierung für die thermo-plastische Sortierung in einer Vorrichtung erfolgt, so daß der Wärmeeintrag sowohl zur Trocknung als auch zur Sortierung genutzt wird.

2. Verfahren zur Verarbeitung von Kunststoffen, die aus sortenvermischten Altkunststoffen gewonnen wurden, welches Methoden der thermo-plastischen Sortierung von Kunststoffen und Methoden der plastifizierenden Verarbeitung beinhaltet
**dadurch gekennzeichnet,**
daß die in den thermo-plastisch sortierten Kunststoffpartikeln enthaltene Restwärme anteilig als Plastifizierwärme genutzt wird.

3. Verfahren zur Verarbeitung von Kunststoffen, die aus verschmutzten und sortenvermischten Altkunststoffen gewonnen wurden, welches Methoden der thermo-plastischen Sortierung von Kunststoffen beinhaltet,
**dadurch gekennzeichnet,**
daß nachfolgend zur thermo-plastischen Sortierung die erwärmten und teilweise noch erweichten Kunststoffteile in einer Bandpresse, einem Quetschwalzenpaar oder durch eine auf einem Band wirkende Quetschwalze zu einem Fell ausgewalzt werden, welches im weiteren Verlauf einer Stanze oder einer Schneidwalze zugeführt wird, so daß als Produkt Granulat-ähnliche Partikel resultieren, ohne daß zur Plastifizierung eine homogenisierende Schmelzephase durchlaufen wird.
